(19) Europäisches Patentamt

European Patent Office

Office européen des brevets

(11) EP 1 310 695 A1

## (12) EUROPEAN PATENT APPLICATION

(43) Date of publication:
14.05.2003 Bulletin 2003/20

(51) Int Cl.7: F16D 43/18

(21) Application number: 02009856.2

(22) Date of filing: 02.05.2002

(84) Designated Contracting States:
AT BE CH CY DE DK ES FI FR GB GR IE IT LI LU
MC NL PT SE TR
Designated Extension States:
AL LT LV MK RO SI

(30) Priority: 12.11.2001 IT TO20011064

(71) Applicant: ADLER S.p.A.
38068 Rovereto (Trento) (IT)

(72) Inventor: Morone, Alfio Ersilio
20129 Milano (IT)

(74) Representative: Bosotti, Luciano et al
c/o Buzzi, Notaro & Antonielli d'Oulx Srl,
Via Maria Vittoria, 18
10123 Torino (IT)

### (54) Adjustable centrifugal friction clutch

(57) A friction clutch including a drive element (7) for driving the rotation of at least one centrifugal mass (5) around a given axis (X2), together with an associated friction surface (12) and elastic return element (6) that pulls it towards the said given axis (X2). The clutch also includes a driven element (14) capable of rotating around the said given axis (X2) and equipped with a skirt surface (13) which can be dragged by the friction surfaces (12) of the centrifugal masses (5) that move away from the said given axis (X2), overcoming the return forces of the elastic elements (6). At least one of the elastic elements (6) has a first end (6a) cooperating with the centrifugal mass (5) and a second end (6b). An adjustment structure (15), carrying at least one engagement formation (15b) for the second end (6b) of the said elastic element (6), is mounted to rotate around the drive element (7). The adjustment structure (15) can be selectively locked (18) with respect to the drive element (7) in a number of adjustment positions, selected via a generic vernier mechanism, each adjustment position determining a corresponding return force exerted by the elastic element (6).

Fig. 2

EP 1 310 695 A1

**Description**

The present invention concerns a friction clutch ("clutch" for short) with automatic centrifugal operation.

The necessity of inserting a mechanical coupling unit in the power-train between a drive shaft and a driven shaft to enable or disable the transmission of power and, in consequence, the transmission of torque, is well known. In general, the drive shaft is the power shaft of an internal combustion engine or an electric motor.

From amongst the various types of mechanical units that can be used for realizing the coupling between the two rotating shafts, the clutch is widely used in current technology and, amongst clutches, automatic clutches with centrifugal operation are those most used. These are clutches that are capable of operating without direct user intervention and the type of coupling they employ is mainly correlated to their speed of rotation.

A typical application for automatic centrifugal clutches are small capacity internal combustion engines, 25-500 cc, used on two/four wheeled vehicles or snowmobiles, in agricultural applications such as chain saws, hedge-trimmers, lawnmowers, etc., as well as industrial applications in general. In this last type of application, electric motors are generally employed and not internal combustion engines.

In simple applications, the automatic centrifugal clutch is the only transmission group used on the vehicle. In more complex applications, the automatic centrifugal clutch is used in combination with a manual or automatic gearbox, with a fixed number of transmission ratios or an infinite number of transmission ratios denominated CVT (acronym for Continuous Variable Transmission).

Automatic centrifugal clutches are functionally characterised by two parameters:

> a) the cut-in speed, or rather the speed at which the clutch starts to transmit torque from the drive shaft to the driven shaft, and
> b) the stall speed, or rather the speed at which the drive shaft stabilises itself during the clutch engagement phase, this speed being between the cut-in speed and the full engagement speed, the speed at which slippage between the drive and driven shafts terminates.

In automatic centrifugal clutches, the amount of transmissible torque grows according to a quadratic function of the speed of rotation, which can be expressed as a mathematical function of the type $C = a + b \times v^2$.

From the mathematical viewpoint, the stall speed of an automatic centrifugal clutch represents the point of intersection between the torque curve of the motor and the curve of the clutch's transmissible torque. To optimise operation of the system on which the centrifugal clutch is mounted, the stall speed is usually made to coincide with the maximum torque speed of the motor with which the system is equipped.

The characteristic curve of automatic clutches, or rather the diagram of transmitted torque against clutch rotation speed depends on various design parameters, of which: the geometry of the clutch components, the mass of the centrifugal masses that determine clutch operation, the tribological characteristics of the friction material (linings) mounted on the centrifugal masses and the load of the return springs normally connected to the centrifugal masses for the purposes of determining the rotational speeds (cut-in speed and stall speed) at which the centrifugal masses perform the clutch engagement/disengagement functions.

In currently produced automatic centrifugal clutches, the previously indicated design parameters are fixed and thus the functional characteristics of the clutch, that is the cut-in and stall speeds of the clutch, are fixed.

A technical requirement exists for systems equipped with a centrifugal clutch to adapt the functional characteristics of the clutch during the course of system usage.

Purely by way of example, in two/four wheeled vehicle racing applications, it is often required to adapt the torque curve of the engine to the type of circuit where the race is held. Changing the torque curve of an engine necessarily requires modifying the functional characteristics of the automatic centrifugal clutch, the cut-in speed and the stall speed, to optimise vehicle performance.

Always by way of example, in certain industrial applications, changes to the functional parameters of the clutch may also be required to adapt the process to the type of material being handled.

A simple way of changing the functional parameters of the clutch using current technology is to change the load of the return springs on the centrifugal masses.

This adjustment is feasible but requires removal of the clutch from the motor, disassembly of the clutch and substitution of the return springs. One is dealing therefore with an operation that is not very practical, expensive, and which requires the availability of an entire range of return springs, or rather sets of return springs for each required spring load.

Instead, precisely because of the remarkable versatility of application, it is important to render the aforementioned clutches easily adjustable, without this resulting in the need for complex intervention, capable of only being carried out by qualified technicians and/or using special equipment.

In particular, the intended objective of this invention is that of avoiding the removal of the clutch from the motor, avoiding disassembly of the clutch itself and avoiding the need of having various sets of return spring for the centrifugal masses, whilst allowing fine adjustment of the length and the assembly and working loads of the spring, and the rapid locking of the spring length and load fine adjustment system.

This invention therefore has the objective of realizing a friction clutch capable of satisfying these requirements in a more than satisfactory manner.

In accordance with the invention, this objective is achieved thanks to a friction clutch possessing the characteristics specifically referred to in the claims that follow.

The spring length adjustment system forming the subject of the invention can be applied to all of the return springs of the centrifugal masses or only some of the return springs involved, with the other end of the springs hooked to a standard component of a normal clutch, such as the centrifugal masses, as is current practice. In this case, even finer adjustment of the functional parameters of the automatic centrifugal clutch can be achieved.

The spring length adjustment system in accordance with the invention also has the advantage of avoiding adjustment errors between the various springs and of working in a state of well-defined spring load settings, in the sense that the springs are not substituted during adjustment and so the tolerance margins of the springs themselves have no effect.

The invention will now be described, by way a non limitative example, and with reference to the enclosed drawings, where:

- Figure 1 is a diametrical section view of a friction clutch in accordance with the invention, and
- Figure 2 is a plan view of one of the elements shown in Figure 1.

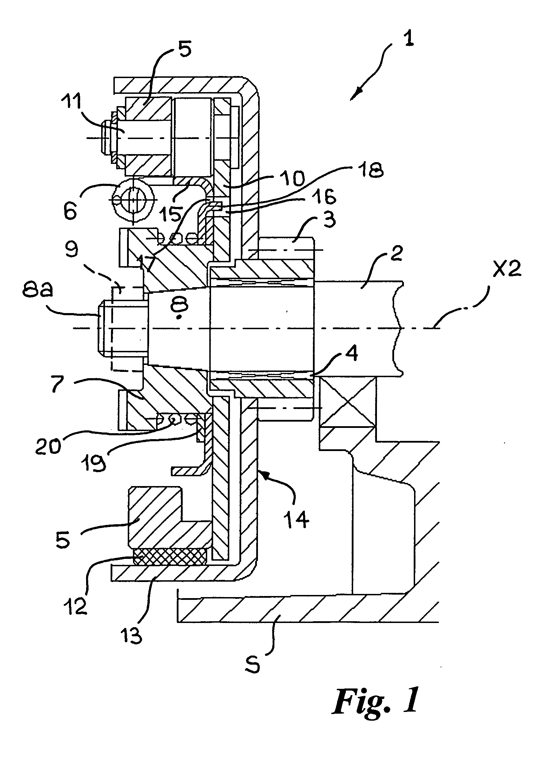

In the figures of the enclosed drawings, reference number 1 indicates a friction clutch assembly destined to be mounted on a support structure S (only illustrated in Figure 1), with the function of selectively transferring rotary motion from the drive shaft 2, rotating around a respective axis X2, and a sprocket wheel or pinion 3 (functioning as the driven element), also capable of rotating around the axis X2 as it is fitted onto the shaft 2 with a bearing 4 placed in between.

In line with a general configuration of known type, the specific engagement function is realized thanks to one or more centrifugal masses 5 (three in number, angularly equidistant at 120° around the axis X2, in the embodiment illustrated herein). The masses 5 have return springs 6 associated with them, the latter consisting of coil springs that - operating as will be better described further on - act by tending to pull the masses 5 towards axis X2, opposing the centrifugal force induced on the centrifugal masses 5 by the rotational speed of the clutch 1.

The centrifugal masses 5 are mounted on a turntable structure, destined to be dragged in rotation around the axis X2 by the shaft 2.

In the example of embodiment illustrated herein, the said turntable structure includes a hub 7, destined to engage on a self-centring conical end tang 8 of the shaft 2. The tang 8 is equipped with a threaded end portion 8a destined to receive a locknut 9. The latter allows the hub 7 to be rendered integral with the shaft 2, such that the hub 7 functions as the clutch's drive element.

The hub 7 peripherally supports an annular plate, commonly known as the "clutch plate" and indicated here as item 10. Pins 11, angularly spaced-out at 120° from each other, are mounted on the plate 10 and carry the centrifugal masses 5, which are disposed in a general flag-like arrangement and preferably dry-mounted, without the insertion of bearings.

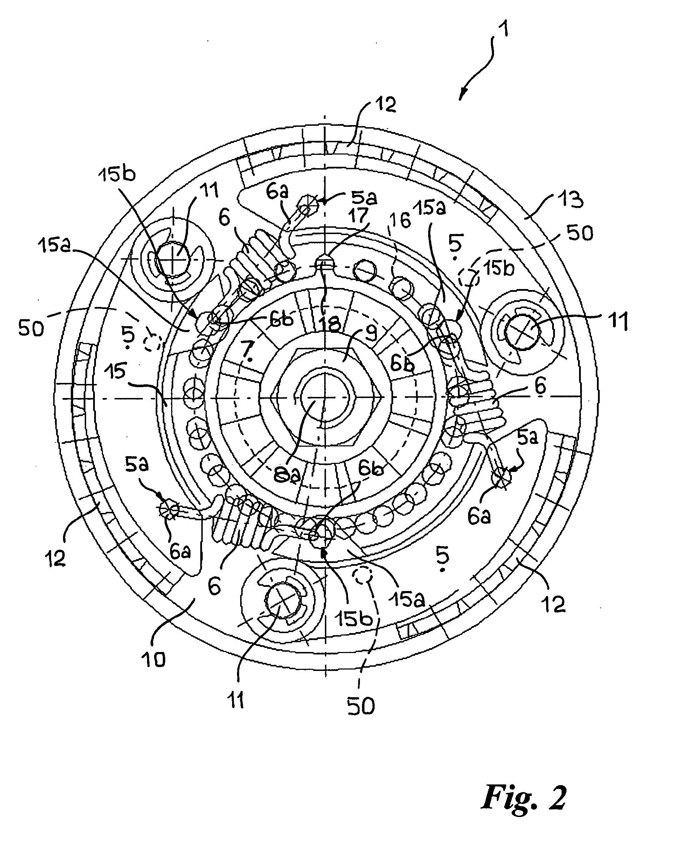

These masses have a general "C" or tile-like shape and are hinged at one of their ends to the pins 11, (refer to the illustration in Figure 2).

The centrifugal masses 5 are provided with a layer ("lining") of friction material 12, such as brake lining or a similar material, on their external or extrados surface. The linings 12 are destined to cooperate with the internal surface of the cylindrical skirt wall 13 of a driven device including a cup-shaped body 14, currently known as a "drum". The drum 14 is provided with a central orifice in which a sprocket wheel or pinion 3 is coupled; this last element is thus integral with the drum 14 in the rotary motion around the axis X2.

The fact will also be appreciated that, even if the pinion 3 and the drum 14 have been illustrated here as two distinct elements rendered integral with each other via mechanical or similar coupling, in reality the two elements in question can be formed as a single piece.

The general principle of operation of the clutch 1 specifies that while the speed of rotation of the shaft 2 remains below a certain level, in practice corresponding to the cut-in speed, the return force exerted by the springs 6 is greater than the centrifugal force and sufficient to keep the centrifugal masses 5 (and, in particular, the friction material linings 12 with which the these masses are externally equipped with), in a disengaged state with respect to the internal surface of the skirt wall 13 of the drum 14. In these conditions, torque is not transferred from the shaft 2 to the pinion 3.

When the speed of rotation of the shaft 2 reaches that corresponding to the cut-in speed, the masses 5 move away from the axis X2 due to effect of the centrifugal force overcoming the return force exercised by the springs 6 and bring their friction surfaces 12 into contact with the internal surface of the skirt wall 13 of the drum 14. In these conditions, the masses 5 (which orbit around the axis X2 as a result of the rotation imparted to the plate 10 by the shaft 2) generate a normal reaction on the skirt 13 that, due to the friction of the linings 12, allows torque to be transmitted and drags the skirt wall 13 of the drum 14 with it. When the torque transmitted by the clutch exceeds the opposing torque applied to the pinion 3, integral with the drum 14, the latter also starts to rotate around the axis X2, dragging with it the pinion or sprocket wheel 3 in the aforesaid rotational movement. The clutch thus starts to transmit rotary motion from the shaft 2 to the sprocket wheel or pinion 3. The clutch engagement action proceeds until the full engagement speed is reached, the speed at which slippage between the drive shaft (hub 7) and the driven shaft (pinion 3) terminates.

In a complementary manner, when the speed of rotation of the shaft 2 falls below the disengagement threshold level, the stall speed (which is usually slightly less than the stall speed in the engagement phase, due to the well known hysteresis phenomena related to the coupling friction of the masses 5 that accompanies the operation of centrifugal friction clutches), the force of the springs 6 is once again capable of effectively opposing the centrifugal force acting on the masses 5, reducing the normal contact force of the masses 5 with the skirt 13 and therefore the torque that can be transmitted by the clutch, which starts disengagement by slipping. At rotational speeds slightly lower (due to the above-indicated hysteresis phenomena) than the clutch's cut-in speed, the force of the springs 6 exceeds the centrifugal force applied to the masses 5, which are thus pulled back again towards the axis X2. In consequence, the friction surfaces 12 disengage from the skirt wall 13 of the drum 14, bringing the clutch into the disengaged state.

By regulating the return force exerted by the springs 6, it is therefore possible to selective change the band of rotational speed levels of the shaft 2 at which the engagement/disengagement action of the clutch 1 is effected.

Looking closer at any one of the springs 6 (the solution that will now be described can be repeated for each of the three springs in question), it can be seen that it is composed of a coil spring, the ends of which, indicated as 6a and 6b respectively, are hook-shaped.

In particular, the end 6a destined to engage with the end of the centrifugal mass 5 opposite to the pin 11, passes through a hole 5a present on the centrifugal mass 5 itself.

The opposite end 6b is instead hooked to a ring structure (or "cup") 15 (refer initially to Figure 1) mounted on the hub 7.

The position that the centrifugal masses 5 assume is determined by the state of equilibrium of the moments around the pin 11 relative to the forces applied to the masses 5 themselves: the centrifugal force, the return force of the springs 6, the normal contact reaction with the skirt wall 13 of the drum 14 and the consequent tangential force generated by the friction material that is used for linings 12. The latter two forces are only present at the clutch speeds above the cut-in speed, a speed at which the moments of the centrifugal force and the return force of the return spring 6 of the centrifugal mass 5 are equal with respect to the pin 11.

When the speed of the clutch plate 10 exceeds cut-in speed of the clutch, the masses 5 are in contact with the skirt surface 13 of the drum 14 and transmit torque due to the normal contact reaction and the consequent tangential friction reaction. Torque transmitted from the clutch to the drum 14 is transferred to the driven shaft via the pinion o sprocket wheel 3 fixed to the drum 14.

As has already been described, the torque transmitted by the clutch varies according to the square of the rotational speed of the plate 10, starting from zero when the clutch rotation speed is less than or equal to the clutch's cut-in speed.

From what has been said beforehand regarding the balance of the moments applied to the centrifugal masses 5, it may be noted that it is possible to alter the functional characteristics of the clutch by changing the load levels of the return springs 6.

The objective of this invention is exactly that of permitting fine adjustment of the load of the springs 6.

This result is achieved using an arrangement whereby the annular structure (or "plate") 15 has the capacity of rotating with respect to the clutch plate 10.

In addition, the annular structure 15 is also capable of rotating with respect to the hub 7.

In particular, the annular structure 15 also exhibits a substantially cup-shaped structure, being equipped along its edge, or at least in a number of areas less than or equal to the number of springs 6, with one or more protruding parts 15a with ear-shaped formations 15b (see Figure 2), each of which defines an opening into which the end 6b of one of the springs 6 can be hooked. This explains why, as previously stated, the protruding parts 15a are less than or equal to the number of the said springs.

By selectively changing the angular position of the annular structure 15 with respect to the plate 10, carrying the pins 11 on which the centrifugal masses 5 are mounted, it is possible to selectively change the elastic return force that the springs 6 exert on the centrifugal masses 5.

However, it is necessary to do this in such a manner that, while being able to selectively change its position with respect to the clutch plate 10, the annular structure 15 is still capable of exerting the necessary reactive force on the springs 6. In other words, it must be possible to lock the annular structure 15 with respect to the hub 7 and the plate 10

- in a selective manner - in one of a number of adjustment positions, corresponding to different reaction force levels exerted by the springs 6.

To achieve this result, both the plate 10 and the annular structure 15 are equipped, on their mutually facing parts, with two crowns of openings 16 and 17 capable of being brought into a position facing each other such that, when mutually aligned, a hole is formed for inserting a pin or lug 18, extending in a generally axial direction with respect to the clutch 1 (or rather, in the direction of the axis X2).

As will be better appreciated after comparing Figures 1 and 2, the lug 18 is preferably made in the form of a folded appendage extending from the adjustment ring 19 fitted over the hub 7 and subjected to the action of a coil spring 20 (or a "Seeger" type elastic ring for shafts). The elastic element 20 is also fitted over the hub 7 and its effect is to push the adjustment ring 19 towards the annular structure 15 and the plate 10; in other words, the elastic element 20 operates in a manner that pushes the lug 18 into the engagement position of the mutually facing openings 16 and 17.

In other solutions, the lug 18 fixed over the ring 19 can be locked in an axial position via one or more springs coaxial with the axis of the clutch plate 10 or parallel to the axis of the clutch plate 10.

The solution that uses springs for fixing the ring 19 has the advantage of reducing the cost of a clutch realized in accordance with the above-defined concepts and of being ever quicker when making changes in adjustment, as it does not require any disassembly operations, but simply overcoming the force of the spring 20 when it is desired to disengage the lug 18 from the currently engaged pair of holes 16 and 17.

In the preferred manner, the crowns of openings 16 and 17, present on the plate 10 and annular structure 15 respectively, do not have the same number of holes, but each have a different number of holes, e.g. twenty-one holes 16 and twenty holes 17.

In this way, it is possible to create a "vernier" type adjustment mechanism.

The adjustment ring 19 can be freely orientated (in practice over 360°) so as to be able to bring the lug 18 into position for engagement with any pair of mutually aligned holes 16 and 17.

More precisely, the lug 18 can be moved and inserted through any hole 17 (twenty holes in the illustrated example of embodiment) and then through a corresponding hole 16 present on the plate 10. In order to pass the lug 18 (which - as can be better appreciated in Figure 2 - presents a width that approximately corresponds to the diameter of these holes) through both holes 16 and 17, exact alignment of the two holes in question is necessary. Given the different number of holes 16 and 17, to achieve exact alignment between the hole 17 that is chosen each time and the corresponding hole 16, it is necessary that a small orientational movement of the annular structure 15 be made with respect to the plate 10. This small orientational movement results in a corresponding adjustment of the position of the ears 15b, and thus the elastic load applied by springs 6 to the centrifugal masses 5. Everything is done in a discrete step-wise manner (and thus with the precision of the adjustment mechanism of the said elastic preloading) that - depending on the type of vernier mechanism - increases in adjustability as the number of holes 16 and 17 augment. The number of possible adjustment positions is given by the number n (equal to the twenty in the example illustrated herein) of the holes 17 on the structure 15 into which the lug 18 can be inserted. These n different relational positions are chosen using angular offsets of 360/(n+1), where n+1 (equal to twenty-one in the example illustrated herein) is the number of holes 16 present on the plate 10. It is evident, however, that the aforesaid vernier mechanism can also be used in configurations where the difference between the number of holes 16 and the number of holes 17 is greater than one, e.g. difference vales of 2, 3, etc.

Realizing the holes 16 and 17 as described above results in the change in the relative angular position between the clutch plate 10 and the structure 15 being extremely fine when passing from a relative position between the clutch plate 10 and the structure 15, determined by a hole on the crown 16 coinciding with a hole of the crown 17, to the position immediately to the left or right of this coincident hole.

With reference to the above-indicated numerical values, or rather twenty-one holes 16 for the crown realized on the clutch plate 10 and twenty holes for the crown of openings 17 realized on the structure 15, the angular variation between the current position and that obtained by moving the pin or lug 18 by one hole is given by:

$$360°/20 - 360°/21 = 0.857°$$

for a minimum angular distance between the holes of $360°/21 = 17.14°$

The set with the greatest number of holes can be realized on the clutch plate 10 or on the structure 15, without altering the advantages of the invention.

In correspondence to this fine angular variation, there is fine change in the mounting and working length of the springs 6 and, in consequence, a fine variation in the elastic load applied by the springs 6 of the centrifugal masses 5.

The enclosed Table 1, purely by way of a non-limitative example, shows the values of angular changes between the clutch plate 10 and the structure 15, and the corresponding lengths and working loads of the spring 6 obtained with a set of twenty-one holes on the clutch plate 10 and twenty holes and on structure 15.

TABLE 1

| Hole position | Spring length mm | Spring load kg |
|---|---|---|
| 0 | 24.60 | 10.50 |
| 1 | 24.93 | 11.16 |
| 2 | 25.25 | 11.81 |
| 3 | 25.58 | 12.46 |
| 4 | 25.91 | 13.11 |
| 5 | 26.23 | 13.76 |
| 6 | 26.55 | 14.40 |
| 7 | 26.87 | 15.04 |
| 8 | 27.19 | 15.68 |
| 9 | 27.51 | 16.32 |
| 10 | 27.83 | 16.96 |
| 11 | 28.14 | 17.59 |
| 12 | 28.46 | 18.22 |
| 13 | 28.77 | 18.84 |
| 14 | 29.08 | 19.47 |
| 15 | 29.39 | 20.09 |
| 16 | 29.70 | 20.71 |
| 17 | 30.01 | 21.32 |
| 18 | 30.32 | 21.93 |
| 19 | 30.62 | 22.54 |

The torque values transmitted by the clutch, realized with twenty-one holes on the clutch plate 10 and twenty holes on the structure 15, as settings for the length and working load of the springs 6 are changed, are shown below in Table 2.

TABLE 2

| Hole | position Spring mm | length Spring kg | load Transmittable torque Nm |
|---|---|---|---|
| 0 | 24.60 | 10.50 | 11.72 |
| 1 | 24.93 | 11.16 | 11.24 |
| 2 | 25.25 | 11.81 | 10.76 |
| 3 | 25.58 | 12.46 | 10.29 |
| 4 | 25.91 | 13.11 | 9.81 |
| 5 | 26.23 | 13.76 | 9.34 |
| 6 | 26.55 | 14.40 | 8.87 |
| 7 | 26.87 | 15.04 | 8.41 |
| 8 | 27.19 | 15.68 | 7.94 |
| 9 | 27.51 | 16.32 | 7.48 |
| 10 | 27.83 | 16.96 | 7.01 |
| 11 | 28.14 | 17.59 | 6.55 |
| 12 | 28.46 | 18.22 | 6.09 |
| 13 | 28.77 | 18.84 | 5.64 |
| 14 | 29.08 | 19.47 | 5.18 |
| 15 | 29.39 | 20.09 | 4.73 |
| 16 | 29.70 | 20.71 | 4.28 |
| 17 | 30.01 | 21.32 | 3.83 |
| 18 | 30.32 | 21.93 | 3.39 |

TABLE 2   (continued)

| Hole | position Spring mm | length Spring kg | load Transmittable torque Nm |
|---|---|---|---|
| 19 | 30.62 | 22.54 | 2.94 |
| Transmittable torque of clutch at reference speed of 10000 rpm | | | |

The fact that only one pair of holes from those on the crowns 16 and 17 can coincide between the clutch plate 10 and the structure 15, brings the advantage of avoiding errors during the spring load adjustment phase.

The corresponding adjustment operation is easy to carry out, without the need for special tools or equipment.

To change the adjustment position of the clutch 1, it is sufficient to intervene by simply separating the adjustment ring 19 from the adjustment structure 15, using a screwdriver for example, overcoming the return force of the spring 20, and thereby extract the lug 18 from the pair of holes 16 and 17 in which it is currently inserted.

The adjustment ring 19 can then be rotated to bring the lug 18 into alignment with another hole 17. The lug 18 must then be made to pass through the newly selected hole 17 and then through its associated hole 16. In order to complete the engagement operation of the lug 18 (which is also aided by the presence of the spring or Seeger ring 20), it is necessary to slightly alter the orientation of the structure 15 with respect to the plate 10. This adjustment movement is in fact the one that determines the preload setting of the springs 6 and therefore the engagement adjustment operation that it is intended to perform. Thus, each hole 17 corresponds to an adjustment position and therefore to a certain value for the elastic load of the springs 6 and the engagement/disengagement speed band.

In a possible variant of the invention, only part of the return springs 6 of the centrifugal masses 5 is hooked to the holes 15b realized on the structure 15, while the remaining part of the return springs 6 is hooked to a hole 50, normally situated in a position close to the pin 11 of the centrifugal masses 5. This anchorage point can also be realized on top of the other clutch components, in line with current technology. This implementation allows even finer adjustment of the clutch's functional characteristics.

It will thus be appreciated that the solution in accordance with the invention permits the realization of an automatic centrifugal clutch, equipped with centrifugal masses and return springs for the centrifugal masses, where the mounting and working length of the springs is adjustable in a very precise manner via a specific device.

In particular, the mounting and working loads of the springs can be obtained via an anchorage plate for one end of the springs, with the other end of the return springs being attached to the masses.

Changes are thus achieved simultaneously and in the same measure on all springs. However, it is also possible to achieve this change, simultaneously and by the same amount, by only acting on part of the spring, with the remaining part not equipped with an adjustment device, but fixed to the masses or other points of the clutch, in line with current technology.

In the preferred manner, the changes in question are obtained via two sets of equidistant holes made in two coupled elements, the clutch plate and the adjustment structure, with the two sets of equidistant holes on the two coupled elements having a slight difference in the number of holes present: 1, 2, 3, etc. The set of holes with the most holes can be realized on the clutch plate or on the adjustment structure.

Connection of the two elements in question is preferably realized via a quick-fit system realized using a lug, pin, tongue or similar item fixed to a ring or held down by a nut and kept in position by an elastic shaft ring, or via a pin fixed on a ring or held down by a nut and kept in position by an elastic element such as a spring or an equivalent retaining element.

As a less preferred alternative, this mounting can be achieved using a nut or a bolt.

Of course, the principle of the invention being understood, the constructional details and forms of embodiment could be extensively changed with respect to that described and illustrated, without leaving the scope of this invention.

**Claims**

**1.** A friction clutch, **characterized in that** it includes:

- a turntable element (10) connected to a drive element (7) for dragging in rotation around a given axis (X2) at least one centrifugal mass (5), with which a friction surface (12) and at least one elastic element (6) for return to the said given axis (X2) are associated, and
- a driven device (14) capable of rotating around the said given axis (X2) and provided with a skirt surface (13) capable of cooperating with the friction surface (12) of the said at least one centrifugal mass (5), which moves away from the said given axis (X2) when it overcomes the return force of the said elastic element (6),

and **in that**:

- the said elastic element (6) has a first end (6a) cooperating with the said at least one centrifugal mass (5) and a second end (6b),
- an adjustment structure (15) is provided mounted rotatably with respect to the said turntable element (10) and carrying at least one engagement formation (15b) for the said second end (6b) of the said elastic element (6), and
- the said adjustment structure (15) is selectively lockable (18) with respect to the said turntable element (10) in a number of adjustment positions, each adjustment position determining a corresponding value for the return force exerted by the said elastic element (6).

2. A clutch according to Claim 1, **characterized in that** it includes a multiplicity of the said centrifugal masses (5) with their respectively associated elastic return elements (6), and **in that** the said adjustment structure (15) presents a corresponding number of engagement formations (15b) for the second end (6b) of the said elastic elements (6).

3. A clutch according to Claim 1, **characterized in that** it includes a multiplicity of the said centrifugal masses (5) with their respectively associated elastic return elements (6), with part of the said elastic elements coupled to the said adjustment structure (15), while the remaining part is connected between different centrifugal masses or between a centrifugal mass and the body of the clutch (1).

4. A clutch according to Claim 2 or Claim 3, **characterized in that** the said centrifugal masses (5) are arranged in an angularly equidistant manner around the said given axis (X2).

5. A clutch according to any of the Claims 2 to 4, **characterized in that** it includes three centrifugal masses (5).

6. A clutch according to any of the preceding Claims, **characterized in that** the said adjustment structure (15) has an annular form that at least partially overlays the same area as the said turntable element (10); the said turntable element (10) and said adjustment structure (15) are equipped with respective holes (16 and 17), capable of being brought into a position facing each other, a lug-type locking formation (18) that can be engaged in the said holes (16 and 17) when mutually facing each other also being provided.

7. A clutch according to Claim 6, **characterized in that** the said locking formation (18) is restrained by at least one additional elastic element (20) that forces the said locking formation (18) into an insertion position over the said mutually facing holes (16 and 17).

8. A clutch according to Claim 6 or Claim 7, **characterized in that** the said locking formation (18) is carried on an adjustment ring (19) mounted to freely rotate around the said drive element (7).

9. A clutch according to Claim 7 and Claim 8, **characterized in that** the said at least one additional elastic element is composed of a coil spring (20) mounted over the said drive element and which forces the said adjustment ring (19) towards the said adjustment structure (15).

10. A clutch according to any of the Claims 6 to 8, **characterized in that** the said turntable element (10) and the said adjustment structure (15) each carry a crown of openings (16 and 17) arranged according to corresponding paths, but differing in number on each crown, for which the angular position relative to the said turntable element (10) and the said adjustment structure (15), and thus the elastic load applied by the said at least one elastic return element (6) to the said at least one centrifugal mass (5) is selectively adjustable via a vernier mechanism.

11. A clutch according to Claim 10, **characterized in that** the number of holes (16 and 17) in the said crowns of openings differ from crown (16) to crown (17) by at least one.

*Fig. 1*

**Fig. 2**

**European Patent Office**

## EUROPEAN SEARCH REPORT

Application Number

EP 02 00 9856

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 726 405 A (CDC SNC) 14 August 1996 (1996-08-14) * the whole document * | 1-6 | F16D43/18 |
| A | FR 807 934 A (BANKER OSCAR HENRY) 25 January 1937 (1937-01-25) * figure 1 * | 1 | |
| A | US 3 367 463 A (ARMSTRONG GORDON C) 6 February 1968 (1968-02-06) * figure 1 * | 1 | |
| A | US 5 165 510 A (LUNATI JOE A) 24 November 1992 (1992-11-24) * figure 1 * | 1 | |

TECHNICAL FIELDS SEARCHED (Int.Cl.7)

F16D

The present search report has been drawn up for all claims

| Place of search | Date of completion of the search | Examiner |
|---|---|---|
| MUNICH | 11 July 2002 | Foulger, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 310 695 A1

**ANNEX TO THE EUROPEAN SEARCH REPORT**
**ON EUROPEAN PATENT APPLICATION NO.**     EP 02 00 9856

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2002

| Patent document cited in search report | | Publication date | Patent family member(s) | | Publication date |
|---|---|---|---|---|---|
| EP 0726405 | A | 14-08-1996 | IT | B0940556 A1 | 17-06-1996 |
| | | | EP | 0726405 A2 | 14-08-1996 |
| | | | JP | 8254225 A | 01-10-1996 |
| FR 807934 | A | 25-01-1937 | NONE | | |
| US 3367463 | A | 06-02-1968 | NONE | | |
| US 5165510 | A | 24-11-1992 | NONE | | |

EPO FORM P0459

For more details about this annex : see Official Journal of the European Patent Office, No. 12/82

12